**Europäisches Patentamt**

**European Patent Office**

**Office européen des brevets**

(19)

(11) Numéro de publication: **0 202 517**
**B1**

(12) **FASCICULE DE BREVET EUROPEEN**

(45) Date de publication du fascicule du brevet: **11.10.89**

(51) Int. Cl.⁴: **A47J 31/40**

(21) Numéro de dépôt: **86106018.4**

(22) Date de dépôt: **02.05.86**

(54) **Machine à café automatique.**

(30) Priorité: **07.05.85 CH 1930/85**

(43) Date de publication de la demande:
**26.11.86 Bulletin 86/48**

(45) Mention de la délivrance du brevet:
**11.10.89 Bulletin 89/41**

(84) Etats contractants désignés:
**AT BE DE FR IT NL**

(56) Documents cités:
**EP-A- 0 117 583**
**EP-A- 0 129 930**
**WO-A- 82/01120**
**DE-A- 2 006 930**
**DE-A- 3 316 157**
**FR-A- 1 319 958**
**FR-A- 2 226 137**

(73) Titulaire: **IN ALBON, Jean-Paul, Rue des Pontets,
CH-1917 Ardon(CH)**

(72) Inventeur: **IN ALBON, Jean-Paul, Rue des Pontets,
CH-1917 Ardon(CH)**

(74) Mandataire: **Leger, Jean-François et al, Micheli &
Cie 118, rue du Rhône Case postale 47,
CH-1211 Genève 6(CH)**

**Description**

La présente invention se rapporte à une machine à café automatique, plus particulièrement appropriée pour l'obtention de café de type "expresso".

On sait qu'un des éléments déterminants pour la qualité et la concentration d'un café express est la compression de la poudre de café utilisée. Or, dans les machines à café express connues, cette compression ne peut pas être facilement contrôlée et n'est en générale pas constante.

D'autre part, on connaît également déjà des machines à café, telles que décrites dans le document DE-A 2 006 930, dans lesquelles le mécanisme de préparation du café est disposé horizontalement et comporte une chambre d'infusion destinée à recevoir la poudre de café qui est obturée dans au moins une position de service par deux pistons. Toutefois, ce type de machine n'est pas non plus conçu pour contrôler aisément et sans faire appel à un dispositif sophistiqué et coûteux la compression de la poudre de café.

Le but de cette invention consiste donc à remédier à l'inconvénient précité, en fournissant une machine à café automatique, qui permette l'ajustage de la compression de la poudre de café à une valeur prédéterminée, et le contrôle du caractère constant de cette compression, pour les mêmes autres facteurs déterminants, notamment la nature du café utilisé, la granulométrie de la poudre, la température et la pression de l'eau ou de la vapeur, etc.

Le but ci-dessus est atteint par la machine à café automatique selon l'invention, qui présente les caractéristiques définies dans la revendication 1.

Le dessin annexé illustre schématiquement et à titre d'exemple une forme d'exécution de l'invention.

Les figures 1, 2 et 3 sont des vues en coupe du mécanisme de compression de la poudre de café, montrant trois phases successives de fonctionnement pour la préparation du café.

La figure 4 est une vue générale schématique simplifiée d'une réalisation de la machine à café.

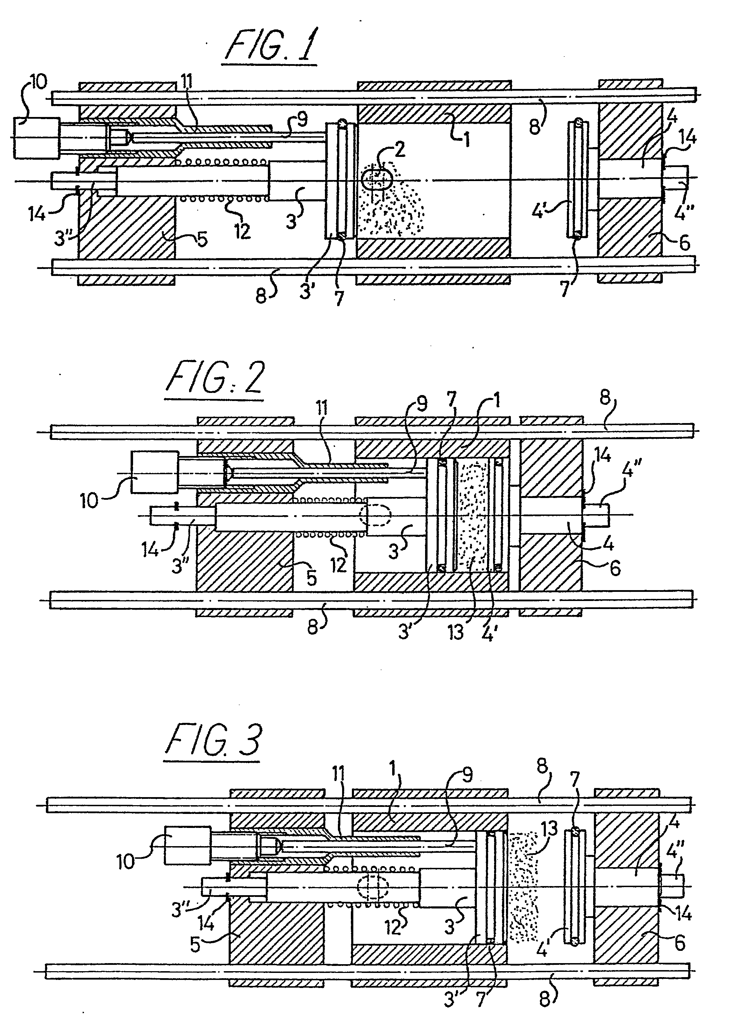

Comme illustré sur les figures 1 à 3, le mécanisme de préparation du café express comprend une chambre d'infusion cylindrique 1, dans la paroi de laquelle est percé un orifice radial 2 d'entrée de la poudre de café provenant d'un dispositif connu en soi (non montré) servant de moulin à café et de portionneur. Deux pistons 3,4 portés par des chariots 5,6 assurent en position de service (figure 2) l'obturation momentanée de la chambre d'infusion cylindrique 1, plus particulièrement par leur tête respective 3',4' munie chacune d'un joint d'étanchéité circulaire 7. De plus, les tiges 3",4" des pistons 3,4 sont creuses et forment chacune un canal débouchant sur la face libre de la tête de piston 3',4', celle-ci étant munie d'une grille filtrante (non illustré) à l'extrémité dudit canal.

Les chariots 5,6 sont montés coulissant axialement sur des guides longitudinaux 8. De plus, un palpeur 9 et un micro-contact télescopique 10 sont fixés sur le chariot 5, au moyen d'une gaine-support 11, de manière à rendre le palpeur 9 et le contact 10 solidaires en déplacement axial du piston 3.

Les figures 1 à 3 illustrent trois étapes de la préparation du café express, qui seront donc maintenant décrites.

Tout d'abord, les éléments constitutifs du mécanisme sont dans la position de la figure 1, le piston 3 obturant une extrémité de la chambre cylindrique 1. Lorsque l'utilisateur agit sur l'organe de commande (non représenté), le café moulu en une quantité déterminée est introduit dans la chambre 1 par l'orifice radial 2.

La figure 1 indique donc la position des pièces mécaniques au moment où la poudre de café arrive dans la chambre d'infusion 1. Le palpeur 9 se trouve dans son logement entre la face arrière de la tête 3' du piston 3 et le micro-contact télescopique 10; le ressort 12 placé entre le chariot 5 et l'épaulement de la tige du piston 3 est détendu.

Dans la position de la figure 2, les chariots 5,6 ont avancé dans leur course de rapprochement des pistons 3 et 4; tandis que le chariot 6 s'arrête au moment où le piston 4 obture l'autre extrémité de la chambre d'infusion 1, le chariot 5, porteur du micro-contact télescopique 10, du palpeur 9 et du piston 3, continue d'avancer pour assurer la compression de la poudre de café entre la tête 3',4' des pistons 3,4. En même temps, le ressort 12 est comprimé proportionnellement à l'espace laissé libre entre le palpeur 9 et l'arrière de la tête 3' du piston 3; en fait c'est la compression du ressort 12 qui détermine le degré de compression de la poudre de café. Au moment de la compression du ressort 12, le palpeur 9 capte la pression sous l'effet de la progression du chariot 5; lorsque la compression voulue, prédéterminée, est atteinte, le palpeur 9 agit sur le micro-contact télescopique 10; celui-ci donne le signal d'arrêt du chariot 5, puis provoque l'arrivée de l'eau d'infusion par le canal de la tige 3" du piston 3.

La figure 3 illustre la position des pièces mécaniques lorsque le café express a été obtenu et s'est écoulé par le canal de la tige creuse 4" du piston 4; l'alimentation en eau est donc stoppée. Le piston 4 est déplacé dans sa position de départ, alors que le piston 3 continue sa course pour éjecter la pastille 13 formée par la poudre de café comprimée, celle-ci tombant alors dans un récipient de récupération (non montré). Le ressort 12 est détendu, et le palpeur 9 a libéré le micro-contact télescopique 10. Le chariot 5 et le piston 3 reprennent ensuite leur position de départ (figure 1). La solidarisation des pistons 3,4 sur les chariots 5,6 est obtenue par des arêtes "Seeger" 14.

L'avantage essentiel que présente le mécanisme de préparation du café, tel que décrit à titre d'exemple en référence aux figures 1 à 3, par rapport aux mécanismes correspondants des machines à café connues, consiste en ce que la compression de la poudre de café, avant le passage de l'eau ou de la vapeur d'eau, est contrôlée, c'est-à-dire qu'elle peut être ajustée à une valeur prédéterminée (en fonction de la concentration désirée, de la granulométrie de la poudre, etc.) et que cette valeur de compression est maintenue constante de manière à obtenir un café de qualité constante. Ainsi, on évite d'avoir recours à des butées telles que celles utilisées dans les machines à café express automatiques traditionnelles, qui présentent l'inconvénient de conduire à une compression insuffisante dans le cas d'un dosage de poudre de café insuffisant, et à contrario une surpression indésirable. Avec la présente invention, la pression peut être maintenue constante, quel que soit le dosage de la poudre de café.

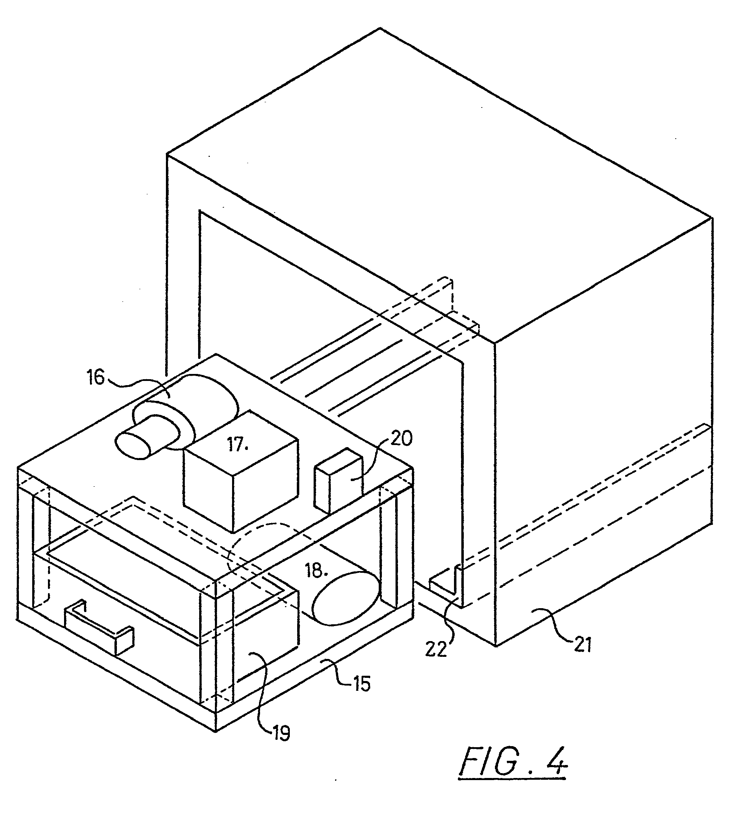

La figure 4 illustre schématiquement une variante de la machine à café selon l'invention, dans laquelle tous les éléments fonctionnels sont réunis sur un bâti amovible unique 15. Plus particulièrement, sur ce bâti 15 sont montés un moulin à café et proportionneur 16, le mécanisme décrit précédemment de préparation du café et schématisé sous la référence 17, un dispositif 18 de production d'eau chaude, un tiroir-récipient 19 récupérateur des pastilles de café comprimées, et les organes de commande 20.

Le bloc bâti-mécanisme peut donc être introduit dans n'importe quel type de carrosserie 21, présentant des rails de guidage ou glissières 22. Cette carrosserie peut être complètement indépendante, ou faire partie d'un meuble comportant d'autres appareils.

Cette conception est particulièrement avantageuse pour l'entretien et la réparation des machines à café. Il suffit en effet, en cas de panne par exemple, ou d'entretien prolongé, de débrancher les conduites d'eau et d'alimentation électrique et de procéder à un échange standard provisoire. Ainsi, dans un établissement public, la mise hors-service de la machine sera limitée à quelques minutes.

## Revendications

1. Machine à café automatique, dans laquelle le mécanisme de préparation du café est disposé horizontalement et comporte une chambre d'infusion (1) destinée à recevoir la poudre de café, cette chambre présentant un orifice latéral (2) d'introduction de la poudre de café et étant obturée dans au moins une position de service par deux pistons (3, 4), et dans laquelle le premier piston (3) obturant une des extrémités de la chambre, est monté déplaçable axialement à l'intérieur de celle-ci et comporte une tige creuse (3") servant de conduit d'entrée axial de l'eau ou de la vapeur d'eau, caractérisé par le fait que le second piston (4) est monté déplaçable axialement d'une position de service obturant l'autre extrémité de ladite chambre d'infusion et une position hors-service à l'extérieur de celle-ci, ce second piston (4) comportant une tige de piston creuse (4") servant de conduit de sortie axial du café liquide obtenu, par le fait que chaque piston est monté solidaire en déplacement d'un chariot, lui-même monté coulissant axialement sur des guides longitudinaux (8), et qu'un ressort (12) de compression est disposé entre la tête du premier piston et le chariot portant celui-ci ledit premier piston (3) pouvant se déplacer axialement de façon limitée par rapport au chariot (5), et par le fait qu'elle comporte encore des moyens de contrôle de la compression de la poudre de café dans ladite chambre d'infusion (1), commandant l'avance dudit premier piston, le tout étant agencé de telle sorte que la poudre de café utilisée et comprimée sous la forme d'un pastille est poussée à l'extrémité de la chambre d'infusion par le premier piston continuant sa course, ladite pastille tombant sous l'effet de la gravité hors de la chambre d'infusion lorsque ledit second piston est dans sa position hors-service, lesdits moyens de contrôle de la compression comprenant un palpeur (9) dont une extrémite est solidaire de la tête du premier piston (3) et dont l'autre extrémité coopére avec un micro-contact télescopique (10) porté par le chariot (5), ledit micro-contact commandant l'avance du premier piston et l'alimentation en eau ou en vapeur par la tige creuse de celui-ci.

2. Machine à café selon la revendication 1, caractérisée par le fait qu'elle comporte un bâti (15) sur lequel sont fixés le mécanisme de préparation du café et les autres organes fonctionnels, ce bâti étant monté de manière amovible dans une carrosserie (21).

3. Machine à café selon la revendication 2, caractérisée par le fait que la carrosserie (21) est indépendante ou intégrée dans un meuble, et qu'elle comporte dans sa partie inférieure des glissières (22) de support destinées à recevoir ledit bâti (15).

## Patentansprüche

1. Automatische Kaffeemaschine, bei der der Herstellungsmechanismus für den Kaffee horzontal angeordnet ist und eine Aufgußkammer (1) umfasst, die dazu bestimmt, das Kaffeepulver aufzunehmen, welche Kammer eine seitliche Öffnung (2) zum Einbringen des Kaffeepulvers aufweist und in wenigstens einer Arbeitsstellung von zwei Kolben (3, 4) verschlossen ist und in der der erste Kolben (3), der eines der Enden der Kammer verschließt, axial verschiebbar im Innern derselben montiert ist und einen hohlen Schaft (3") aufweist, der als axiale Einlaßleitung für Wasser oder Wasserdampf dient, dadurch gekennzeichnet, daß der zweite Kolben (4) zwischen einer Arbeitsstellung, in der er das andere Ende der genannten Aufgußkammer verschließt, und einer Ruhestellung außerhalb der Kammer axial verschiebbar montiert ist, daß der zweite Kolben (4) einen hohlen Kolbenschaft (4") aufweist, der als axiale Auslaßleitung für den erhaltenen flüssigen Kaffee dient, daß jeder Kolben fest in der Verschiebung mit einem Gestell verbunden ist, das seinerseits axial gleitend auf Längsführungen (8) montiert ist, und daß eine Druckfeder (12) zwischen dem Kopf des ersten Kolbens und dem diesen tragenden Gestell vorgesehen ist, wobei sich der genannte erste Kolben (3) axial begrenzt in bezug auf das Gestell (5) verschieben kann, und daß sie weitere Einrichtungen zur Steuerung der Kompression des Kaffeepulvers in der genannten Aufgußkammer (1) besitzt, die den Vorschub des genannten ersten Kolbens steuern, und die gesamte Anordnung so ausgebildet ist, daß das verwendete Kaffeepulver in Form eines Kuchens komprimiert wird und vom ersten Kolben, der seinen Vorschub fortsetzt, zum Ende der Aufgußkammer geschoben wird, wobei der genannte Kuchen unter der Wirkung der Schwerkraft aus der Aufgußkammer fällt, wenn sich der genannte zweite Kolben in seiner Ruhestellung befindet, daß die Einrichtung zur Steuerung der Kompression einen Fühler bzw. Sensor (9) umfaßt, dessen eines Ende fest mit dem Kopf des ersten Kolbens (3) verbunden ist und dessen anderes Ende mit einem telekopischen Mikrokontakt (10) zusammenwirkt, der vom Gestell (5) getragen wird, und daß der genannte Mikrokontakt den Vorschub des ersten Kolbens und die Zufuhr von Wasser oder Wasserdampf durch den hohlen Schaft desselben steuert.

2. Kaffeemaschine nach Anspruch 2, dadurch gekennzeichnet, daß sie ein Rahmengestell (15) umfaßt, auf dem der Herstellungsmechanismus für den Kaffee und alle anderen Funktionsorgane befestigt sind, und daß das genannte Rahmengestell lösbar in einem Gehäuse (21) montiert ist.

3. Kaffeemaschine nach Anspruch 2, dadurch gekennzeichnet, daß das Gehäuse (21) unabhängig oder in ein Möbelstück integriert ist und daß es in seinem unteren Abschnitt Stützgleitbahnen (22) aufweist, die dazu bestimmt sind, das genannte Rahmengestell (15) aufzunehmen.

## Claims

1. Automatic coffee machine, in which the mechanism for the preparation of the coffee is disposed horizontally and comprises an infusion chamber (1) intended to receive the coffee powder, this chamber presenting a lateral introduction opening (2) for the coffee powder and being obturated in at least one service position by two pistons (3, 4), and in which the first piston (3) obturating one of the ends of the chamber is mounted axially movable inside said chamber and comprises an hollow rod (3") used as axial inlet duct of the water or the steam, characterized by the fact that the second piston (4) is mounted axially movable from a service position obturating the other end of said infusion chamber and an out-of-service position outside a said chamber, this second piston (4) comprising a hollow piston rod (4") serving as axial outlet duct of the liquid coffee obtained, by the fact that each piston is mounted in a jointly displaceable manner with a carriage, said carriage being axially slidably mounted on longitudinal guides (8), and that a compression spring (12) is arranged between the head of the first piston and the carriage supporting it, said first piston (3) being axially displaceable in a limited way with regards to the carriage (5), and by the fact that it further comprises means for controlling the compression of the coffee powder in said infusion chamber (1), driving the travel of said first piston, the whole being arranged in such a manner that the coffee powder used and compressed in the form of a pellet is pushed to the end of the infusion chamber by the first piston continuing its stroke, said pellet falling down under the effect of the gravity outside the infusion chamber when said second piston is in its out-of-service position, said means for controlling the compress, on comprising a feeler (9) whose one end is bount with the head of the first piston (3) and whose other end cooperates with a telescopic microswitch supported by the carriage (5), said microswitch controling the travel of the first piston and the feeding in water or steam through the hollow rod thereof.

2. Coffee machine according to claim 1, characterized by the fact that it comprises a framework (15) on which the mechanism for preparing the coffee and other functional members are fixed, this framework being mounted in a removable manner in a body (21).

3. Coffee machine according to claim 2, characterized by the fact that the body (21) is independent or integrated within a furniture, and that it comprises in its lower part supporting guides (22) intended to receive said framework (15).

_FIG. 1_

_FIG. 2_

_FIG. 3_

16
17.
20
18.
15
19
22
21

$\underline{FIG.4}$